# EUROPEAN PATENT APPLICATION

(11) **EP 1 160 528 A2**
(43) Date of publication of application: **05.12.2001**
(21) Application number: 01202001.2
(22) Date of filing: 28.05.2001
(51) Int. Cl.: F25J 3/04

(54) **Automatic control system and method for air separation units**

(30) Priority: 30.05.2000 US 207775 P
(71) Applicant: L'air Liquide Société Anonyme pour l'étude et l'exploitation des procédés Georges Claude, 75321 Paris Cédex 07 (FR)
(72) Inventor: Seiver, David S., Sugar Land, Texas 77478 (US); Dupre, L. A., Baton Rouge, LA 70808 (US)
(74) Representative: Le Moenner, Gabriel

(57) **Abstract**

A method for automatically setting a target production level for at least one air separation unit in a network of air separation units. Each air separation unit has a plurality of field elements and at least one regulatory controller associated with one of the field elements, and has an energy usage level corresponding to a level of production. The method includes receiving a production level requirement for the network of air separation units and generating a production target level for at least one of the air separation units which minimizes and/or optimizes the sum of the ASU energy usage levels. The ASUs then can automatically ramp the plant production to the appropriate production target levels via the use of advanced process control (multivariable process controllers and/or advanced feedforward controllers), advanced regulatory control, and regulatory control means. The control system includes a receiver for receiving inputs from the at least two air separation units, and a supervisory controller which generates production target levels for sending to each air separation unit, the production target levels being representative of a network production target level and a network energy usage level.

## Description

This application is related to, and claims priority from, U.S. Provisional Application 60/207,775, which was filed in the United States on May 30, 2000.

### BACKGROUND OF THE INVENTION

### Field of the Invention

This invention relates to a control system, and specifically, to a control system for a network of air separation units.

### Background Information

Cryogenic Air Separation Units (ASUs) have been used to produce oxygen, nitrogen, and argon, and other gases, as desired. An ASU generates gases by refrigerating air and distilling it, so energy is the primary production cost of an ASU.

Air Separation Units may be integrated into a network, with a centrally managed pipeline network for transporting the output gases to customers.
An ASU pipeline network manager's primary objective is to minimize global network energy consumption while maintaining contractually required volumes and pressures along the network. This is accomplished by adjusting operating parameter targets at the various ASUs feeding the pipeline. Traditionally, determining operating parameter targets for the various ASUs has been accomplished by human operators at an Operations Control Center (OCC). ASU plant operators, in turn, strive to adjust their ASU to meet their operating parameter targets from the OCC in an efficient manner. Of course, the nature of human interaction in this process minimizes the prospect of consistent optimal control of the network.

It would be desirable to provide a method for optimization of ASU production levels which is less dependent on human operators, and for controlling the ASUs so they operate in the most efficient manner at their target production levels.

### SUMMARY OF THE INVENTION

In an exemplary embodiment of the invention, a method is provided for automatically setting a target production level for at least one air separation unit in a network of air separation units, each air separation unit including a plurality of field elements and at least one regulatory controller associated with one of the field elements, and having an energy usage level corresponding to a level of production, the method including: receiving a production level requirement for the network of air separation units, and generating a production target level for at least one of the air separation units which minimizes the sum of the network energy usage levels.

In another exemplary embodiment, the method may also include changing the level of production of an air, separation unit until it is about equal to the generated production target level for the air separation unit. In another exemplary embodiment, an advanced process controller for setting a setpoint associated with at least one of the plurality of field elements may be used to change the level of production of an ASU. The advanced process controller may be an advanced feedforward controller. The advanced process controller may also be a multivariable predictive controller. In another exemplary embodiment, both an advanced feedforward controller and a multivariable predictive controller may be included. In another exemplary embodiment, the method can also include monitoring the advanced process controller (APC) to determine whether it is operational, and to what extent the controller is operational (e.g., identify an APC service factor), and further can include identifying a non-operational advanced process controller.

In another exemplary embodiment, the method can also include controlling at least one of a plurality of field elements in an air separation unit. A model based adaptive controller can be used to control the at least one of a plurality of field elements in an air separation unit. In another embodiment, a model free adaptive controller can be used to control the at least one of a plurality of field elements in an air separation unit.

Another exemplary embodiment of the invention includes a control system for automatically setting the target production level for at least one air separation unit in a network of air separation units, each air separation unit including a plurality of field elements and having at least one production level and an energy usage level corresponding to the production level; the control system comprising: a receiver for receiving inputs from the air separation units; and a supervisory controller for generating a production target level for at least one of the air separation units.

In another exemplary embodiment, the control system can receive inputs which include the energy usage levels and levels of production of the air separation units. In another exemplary embodiment, the control system can also include an advanced process controller for changing the production level in an air separation unit until it is about equal to the generated production target level for the air separation unit. In another exemplary embodiment, the advanced process controller can generate a setpoint associated with at least one of the plurality of field elements in the ASU.

In another exemplary embodiment, the control system can also include at least one regulatory controller for controlling the at least one field element of an ASU. Regulatory controllers can be, for example, PID controllers, HIC controllers, gap controllers, or deadband controllers.

In another exemplary embodiment, a network of air separation units comprises: at least two air separation units, each air separation unit including a plurality of field elements and having at least one production level and an energy usage level corresponding to the production level; a pipeline, at least two air separation units in fluid communication with the pipeline; a control system for automatically setting the target production level for the at least two air separation units, the control system in control communication with the at least two air separation units and including a receiver for receiving inputs from the at least two air separation units, and a supervisory controller for generating data representative of a network production target level and a network energy usage level for the air separation units.

### BRIEF DESCRIPTION OF THE DRAWINGS

Other objects and advantages of the present invention will become apparent to those skilled in the art upon reading the following detailed description of the referred embodiments, in conjunction with the accompanying drawings, wherein like reference numerals have been used to designate like elements, and wherein:
FIG. 1 is a schematic of an exemplary Air Separation Unit for use in an exemplary embodiment of the invention.
FIG. 2 is an illustration of a network of Air Separation Units in which the invention can be used.
FIG. 3 is an illustration of a hierarchy of controllers for a network of Air Separation Units, according to an exemplary embodiment of the invention.

### DETAILED DESCRIPTION OF THE PREFERRED EMBODIMENTS

Air separation units separate components of air into gas and liquid outputs, including, for example, oxygen, nitrogen, argon, and other gases, as desired, by cooling, liquefying, and distilling air. One or more of numerous ASUs can be used and controlled according to the present invention. By way of example and not of limitation, ASUs described in any of the following U.S. patents can be used: 5,682,767, 5,901,577, 5,996,373, and 6,202,422 B1.

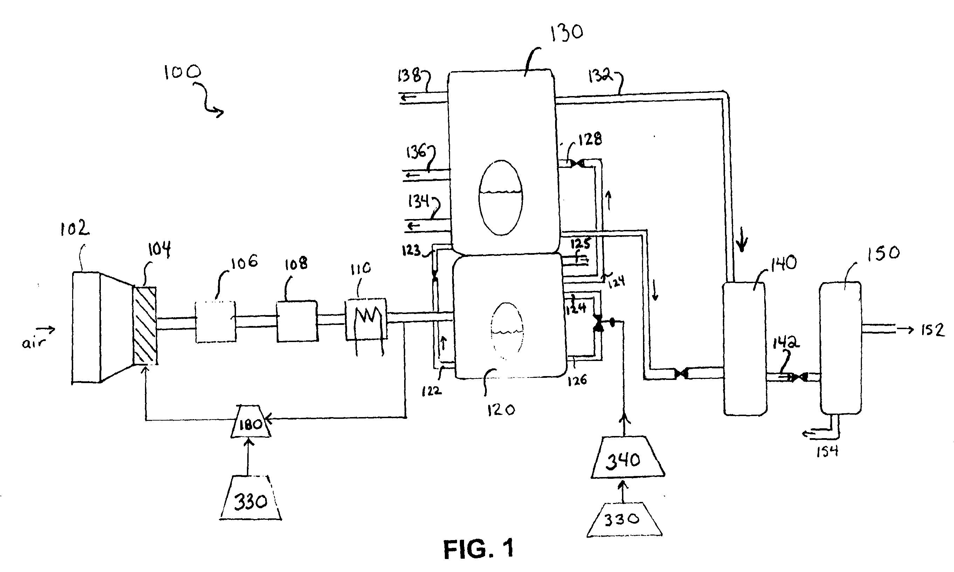

A typical air separation unit 100, shown in FIG. 1 can be configured such that filtered atmospheric air is brought into the plant via a filter 102, an air intake 104 with guide vanes, a main air compressor 106, a dryer 108, and a cooler 110. The dryer 108 can use molecular sieves that are regenerated using a stream of waste nitrogen from another component within the air separation unit. The cooler 110 can be a high efficiency main heat exchanger. The cool, dry, high pressure air can then be directed into the bottom of the high pressure cryogenic distillation column 120.

The bottom of the high pressure cryogenic distillation column 120 contains oxygen-rich liquid (called rich liquid) 122 that can be used as the feed 123 for the low-pressure cryogenic distillation column 130. Condensed, relatively pure nitrogen 124 is formed at the top of the high pressure cryogenic distillation column 120. The condensed, relatively pure nitrogen 124 can be used as reflux 126 for the high pressure cryogenic distillation column 120, reflux 128 for the low pressure cryogenic distillation column 130, and can be output as either liquid or gaseous nitrogen 125.

The bottom of the low pressure cryogenic distillation column 130 contains pure liquid oxygen 134, which may be drawn off as output from the ASU. Gaseous oxygen 136 within the low pressure cryogenic distillation column 130 can be drawn off directly above the liquid oxygen level. The top of the low pressure cryogenic distillation column 130 contains pure gaseous nitrogen 138, referred to as low-pressure nitrogen.

An air separation unit 100 may also include a crude argon column 140, which may be configured as a third cryogenic distillation column attached to the side of the low pressure cryogenic distillation column 130. The low pressure cryogenic distillation column 130 provides an argon-rich stream 132 to the bottom of the crude argon column 140. The crude argon column 140 washes oxygen out of the argon and produces a stream of crude argon 142 that is sent to a pure argon column 150. The pure argon column 150 strips away the remaining nitrogen to produce marketable liquid argon 152. Waste nitrogen 154 from the pure argon column may be used in the dryer 108, if desired.

As will be clear to one skilled in the art, many other configurations of air separations units may be formed, producing greater or fewer types of products.
Air separation units can include a plurality of field elements, such as pumps, compressors, guide vanes, and other devices. At a lowest level of regulatory control, the field elements of an ASU plant 100 illustrated in FIG. are controlled by traditional regulatory controllers such as proportional-integral-differential (PID) controllers, deadband controllers, gap controllers, or hand indicating controllers (HICs). The regulatory controllers regulate the field elements of the ASU plant with high-speed control algorithms (typically less than one second) at setpoints for the regulatory controllers. The setpoints for the regulatory controllers may be entered either by human operators or by another (e.g., higher level) controller, or both.

As an example, in FIG. 1, a regulatory controller 180 is used to control the guide vanes of the air intake 104 to adjust the flow of air into the high pressure cryogenic distillation column 120. The regulatory controller 180 may be any type of suitable controller, including a PID controller, a HIC controller, deadband controller, or a gap controller. In an exemplary embodiment, as illustrated in FIG. 1, the regulatory controller 180 is a PID controller.
For a single ASU, it is generally desirable to optimize the operation of the ASU to meet the following goals: (a) maintain the quality of the nitrogen and oxygen products at a specified level (e.g., minimum purity required to meet contract specifications) while minimizing the waste nitrogen purity and crude argon nitrogen impurities; (b) maximize the product yield (e.g., maximize oxygen, nitrogen, and argon produced from the incoming air feed); (c) stabilize the process (e.g., adjust process conditions to maintain the ASU operation within process and equipment constraint limits, and minimize transient disturbances when the unit is being ramped to new feed or product targets); and (d) maximize the feed throughput for a given energy consumption (e.g., maximize the feed rate subject to equipment limits and product quality specifications). In a market-limited case (e.g., the demand is less than the maximum product yield of the ASU), the feed throughput is efficiently maintained at a lower than maximum level.

For a given product quality, it is generally desirable to maximize the product yield from the incoming feed air while minimizing the energy consumption of the ASU. Most of the operational cost of an ASU 100 is due to its energy consumption.

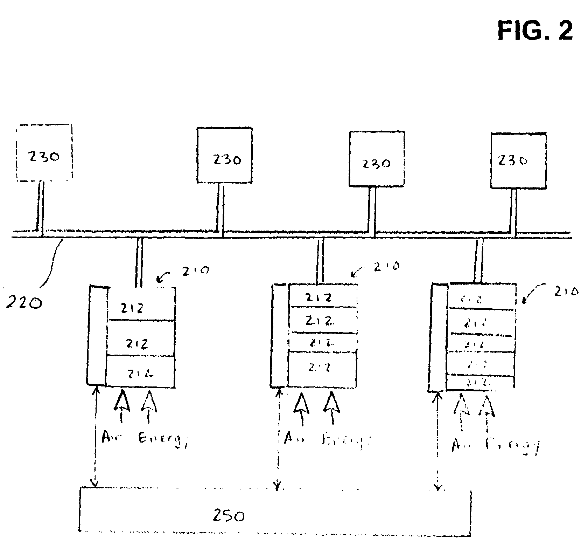

Figure 2 illustrates an exemplary embodiment of a network 200 of air separation units 210. A network 200 of air separation units includes at least two air separation units 210, and a pipeline 220 in fluid communication with the air separation units 210. The pipeline 220 can transport gases from the air separation units 210 to the customers 230. The network 200 also includes a control system 250 in control communication with the air separation units 210. Each air separation unit 210 has a plurality of field elements 212, such as pumps, compressors, guide vanes, and other devices.

The network 200 of air separation units may include some ASUs with greater or lesser efficiency. Further, each ASU can have a range of production levels at which it is most efficient, and other production levels at which it is less efficient. To optimize the network performance, some ASUs may be operated at sub-optimal production levels, that is, at production levels at which they are not most efficient. For example, it might be desirable to operate several ASUs at production levels above their most efficient ranges and to shut down a less efficient plant in the network.

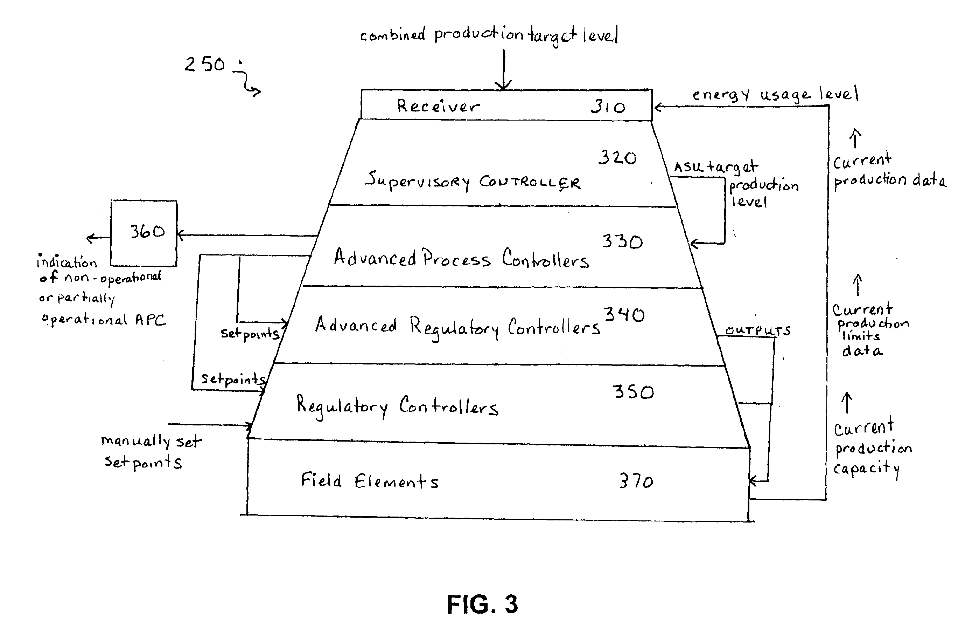

In exemplary embodiment of the invention shown in FIG 3, the control system 250 is in control communication with the at least two air separation units in the network. The control system 250 can include a supervisory level controller 320 and a receiver 310 for receiving inputs from the at least two air separation units 210 in the network 200. The inputs may include, but are not limited to, current plant production data, current plant capacity and production limitation data, and advanced process controller health status and limitation data. The supervisory level controller 320 can generate data representative of a combined production target level and a combined network energy usage level for the air separation units 210 in the network 200. The control system 250 can be used to optimize the performance of the network 200, to ensure the ASUs 210 produce the required product yield at the least cost (lowest combined energy usage level).
In an exemplary embodiment of the invention, the supervisory level controller 320 receives a production level requirement for the network of air separation units, and generates a production target level for each ASU.

The production level requirement for the network of air separation units, and, in general, data which is representative of a network production target level and a network energy usage level, can be generated at the operation control center (OCC), and can be based on the current cumulative production from the air separation units, on current and predicted customer consumption, and on the hydraulic profile of the pipeline network itself. With the network production requirement known, the control system can determine the optimal individual production level targets required of the network ASUs.

In an exemplary embodiment, the supervisory controller 320 includes logic, software programs, and/or expert systems to find the optimum real-time production level target for each ASU. Examples of commercially software programs suitable for controller 320 include, but are not limited to, SynerGEE, a pipeline hydraulic optimizer available from Stoner Associates, Carlyle, Pennsylvania, Visual Mesa, available from Nelson & Roseme, Walnut Creek, California, and G2, available from and Gensym Corporation, of Burlington, Massachusetts.

At the ASU level, when the control system 250 communicates a new production target level to an ASU 210, the production level of the ASU 210 is changed until it is about equal to the production target level for that ASU 210 generated by the supervisory level controller 320. The production level of an ASU may be changed by any type of suitable adjustment means. Ideally, the production level of the ASU 210 is adjusted in a way which optimizes the ASU plant performance, that is, it maximizes the product recovery, maintains the product quality, and minimizes the energy consumption of the ASU, during the period in which the production level of the ASU is ramped to the desired production level. Generally, it is desirable to ramp to the new production target as fast possible in order to achieve the new network optimum in the minimum elapsed time. Once the new production target is met, it is desirable to maintain this new production level in the most efficient manner possible (e.g., with minimal local energy consumption).

In an exemplary embodiment, the adjustment means is an advanced process controller 330, which can optimize the operation of an ASU during ramping of the production level, and during operation at or near the production target level. To achieve this, the advanced process controller 330 is used to set a setpoint for at least one controller for a field element within the ASU. Referring again to FIG. 1, as an example, the advanced process controller 330 could set a setpoint for the PID controller 180 that regulates the quantity of feed air into the cryogenic high pressure distillation column 120. An advanced process controller 330 could also set a setpoint for another type of controller within the ASU, for example, an advanced regulatory controller 340 shown in FIG. 3 and FIG. 1.

The advanced process controller 330 can by any type of controller suitable for setting a setpoint. One type of advanced process controller 330 which would be suitable is an advanced feedforward controller. An advanced feedforward controller is a pseudo cascade controller where the setpoint is the result of the calculated feedforward value biased by a feedback controller. The advanced feedforward controller can be a collection of multiple-input/single-output (MISO) controllers.

Another type of advanced process controller 330 which could be used is a multivariable predictive controller (MVPC). Like an advanced feedforward controller, the multivariable predictive controller writes to setpoints or targets, rather than directly manipulating outputs to regulatory controllers (final control devices). The multivariable predictive controller can be a multiple-input/multiple-output (MIMO) system, which incorporates both feedback and feedforward type control actions.

A multivariable predictive controller identifies relationships between control (or constraint) variables and manipulated variables (changes in setpoints which affect the control variables), then optimizes the process using the identified relationship (or model) between the control variables and the manipulated variables. Repeatable process disturbances can also be included by identifying the relationship between disturbance variables and the control variables. Responses to process disturbances are modeled by first perturbing the independent process variables (manipulated variables) (e.g., the feed rate and reflux rate), measuring the response of the dependent variables (control variables) (e.g., product qualities and column temperatures), and developing models of responses to different process disturbance levels.

An example of a suitable multivariable predictive controller is a goal maximizing controller available from Intelligent Optimization, Inc. of Houston, Texas, under the trade name GMaxC. To initially test and set up GMaxC controller, the independent process variables are perturbed by approximately ±3% to study their interactions with dependent variables. Typically, it takes about 12 hours for each set of five independent variables, with the total plant testing expected to take about 24 to 36 hours. If historical data is sufficient to identify dynamic models, minimal plant testing will be required.

MVPC controllers are often used for processes involving many variables with multiple interactions, and significant response delays between inputs and outputs. Examples of control variables to which an MVPC can be applied include, but are not limited to, reflux flow rates, main dry air flow rates, crude argon production rate, liquid nitrogen production rate, expander inlet flow rate, gas oxygen production rate. An advantage of a multivariable predictive controller is that it requires very little human intervention in it mission of optimizing and stabilizing plant operation.

The advanced process controllers can also be connected to or interfaced with an ASU's Distributed Control System (DCS). The DCS provides interfaces between field elements and ASU controllers, and can provide the plant operators with continuous information about the operation of the ASU's controllers and field elements. The DCS also provides a means for operators to make changes to field elements within the plant. Examples of suitable distributed control systems include, but are not limited to, the Foxboro I/A, Honeywell TDC-3000, Fisher-Rosemount DeltaV and RS3, Siemens-Moore APACS+ and PCS-7, Yokagawa CS1000/3000, and Bailey Infi/Net-90.

In another exemplary embodiment, both an advanced feedforward controller and a multivariable predictive controller are used for advanced process control. The advanced feedforward controller and the multivariable predictive controller share similar goals, that is, to optimize the performance of an ASU, especially during ramping of the ASU production level. A combined APC strategy, that is, one using both a multivariable predictive controllers and an advanced feedforward controller, can minimize implementation time and simplify APC tuning for some applications.

Advanced process controllers 330 can have shutoff logic and/or devices to allow them to be shut off by network or plant operators for various reasons, such as, for example, to allow direct control of the plant by the plant operators, or if the advanced process controllers are not working well. Unless the advanced process controllers 330 are operational, the efficiencies in plant operation which result from their use will not normally be realized. Therefore, in another exemplary embodiment, the control system 250 also can include a monitoring system 360 to monitor the status of the advanced process controllers 330. The monitoring system can provide an indication that an advanced process controller 330 is not in service, or is only partially operational, and is in need of attention. The monitoring system can identify to what extent an advanced process controller is operational (e.g., identify an APC service factor). In an exemplary embodiment, the monitoring system 360 also schedules required maintenance of the advanced process controllers 330 in the ASUs. By adding a monitoring system 360, the percentage of manipulated variables controlled by advanced process controllers will normally increase, indicating an improvement in system performance.

In another exemplary embodiment, a control system 250 includes advanced regulatory controllers in the at least two air separation units of the network. An advanced regulatory controller 340 can write setpoints directly to the regulatory controllers (final control elements) for the field elements 370 within the air separation units.

The advanced regulatory controllers 340 are useful for critical control loops such as, for example, highly interactive, integrating liquid levels, which can be difficult to control using multivariable predictive controllers due to their slower response times. In addition, the advanced regulatory controllers are useful for fast load changes. As an example, referring again to FIG. 1, an advanced regulatory controller 340 can be used to control the flow rate of the rich liquid reflux 126 in the high pressure cryogenic column 120 so it would remain as constant as possible, even during plant ramping and other perturbations.

The advanced regulatory controllers 340 typically use more complicated control methods than traditional regulatory controllers such as PID controllers, but that have a faster execution frequency (e.g., less than five seconds) than the MVPC controllers. Further, the advanced regulatory control layer (the set of advanced regulatory controllers 340 for an ASU, including adaptive controllers) is important for stable ASU operations on critical, hard-to-tune loops where traditional regulatory controllers (e.g., PID controllers) must be constantly adjusted for various operational modes. The advanced regulatory control layer is also useful for critical control loops such as highly interactive, integrating levels, which can be difficult to control with traditional or multivariable predictive control (MVPC), and is crucial for fast load changes.

In an exemplary embodiment, the advanced controller is a model free adaptive controller. An exemplary example of a suitable model free adaptive controller is the model free adaptive controller described in U.S. Patent No. 6,055,524, issued to Cheng, an embodiment of which is available from General Cybernation Group, Inc., in Rancho Cordova, California, under the trade name CyboCon Model-Free Adaptive Controller.
In an alternative embodiment, the advanced regulatory controller can be a model-based adaptive controller. An example of a suitable model-based adaptive controller is the model-based adaptive controller available from Adaptive Resources, Lawrence, PA, under the trade name QuickStudy Adaptive Controller.
Use of an advanced regulatory controller, MVPC, and AFF appears to increase stability and load change speed in an ASU.

The control system illustrated in FIG. 3 thus includes a supervisory controller, and can include various additional controllers or control layers within each ASU. Addition of a supervisory controller and the underlying advance process control and advance regulatory control layers to a network of ASUs will normally lower plant operations staffing costs. For example, a network of ASUs with supervisory controls and advance process controllers may operate 24 hours per day, and require human operators to be present only 40 hours each week. Additionally, the operators, while on duty at the plant, can focus significantly less time on plant operations and more time on other activities like routine plant maintenance, housekeeping, paperwork, etc., thus indirectly reducing staffing costs further. Referring again to the network control hierarchy shown in FIG. 3, the cost to implement each layer of controllers typically decreases, and the benefits increase, for each properly implemented successively higher layer.

It will be appreciated by those skilled in the art that the present invention can be embodied in other specific forms without departing from the spirit or essential characteristics thereof, and that the invention is not limited to the specific embodiments described herein. The presently disclosed embodiments are therefore considered in all respects to be illustrative and not restrictive, and the scope of the invention is to be determined by reference to the appended claims. Each of the aforementioned published documents are incorporated by reference herein in its entirety.

## Claims

1. A method of automatically setting a target production level for at least one air separation unit in a network of air separation units, each air separation unit including a plurality of field elements and at least one regulatory controller associated with one of the field elements, and having an energy usage level corresponding to a level of production, comprising:
receiving a production level requirement for the network of air separation units, and
generating a production target level for at least one of the air separation units which minimizes the sum of the energy usage levels.

2. A method as in claim 1, further comprising:
changing the level of production for one of the at least one air separation units until it is about equal to the generated production target level for the air separation unit.

3. A method as in claim 2, wherein the changing the production level comprises:
using an advanced process controller to set a setpoint associated with at least one of the plurality of field elements.

4. A method as in claim 3, wherein the advanced process controller is an advanced feedforward controller.

5. A method as in claim 3, wherein the advanced process controller controller is an multivariable predictive controller.

6. A method as in claim 3, wherein the advanced process controller includes an advanced feedforward controller and a multivariable predictive controller.

7. A method as in claim 3, further comprising:
monitoring the advanced process controller to determine whether is operational.

8. A method as in claim 7, further comprising:
identifying an advanced process controller if it is non-operational or partially-operational.

9. A method as in claim 8, further comprising:
determining an advance process controller service factor.

10. A method as in claim 3, further comprising:
controlling at least one of a plurality of field elements in an air separation unit.

11. A method as in claim 10, wherein the controlling includes using a model based adaptive controller to control the field element.

12. A method as in claim 10, wherein the controlling includes using a model free adaptive controller to control the field element.

13. A method as in claim 10, wherein the controlling includes using a regulatory controller to control the field element.

14. A control system for automatically setting the target production level for at least one air separation unit in a network of air separation units, each air separation unit including a plurality of field elements and having at least one production level and an energy usage level corresponding to the production level, comprising:
a receiver for receiving inputs from the air separation units; and
a supervisory controller for generating a production target level for at least one of the air separation units.

15. A control system as in claim 14, wherein the inputs include the energy usage levels and the production levels of the air separation units.

16. A control system as in claim 14, further comprising:
an advanced process controller for changing the production level of one of the at least one air separation units until it is about equal to the generated production target level for the air separation unit.

17. A control system as in claim 16, wherein the advanced process controller generates a setpoint associated with at least one of the plurality of field elements.

18. A control system as in claim 17, wherein the advanced process controller is an advanced feedforward controller.

19. A control system as in claim 17, wherein the advanced process controller is an multivariable predictive controller.

20. A control system as in claim 17, wherein the advanced process controller includes an advanced feedforward controller and a multivariable predictive controller.

21. A control system as in claim 17, further comprising a monitoring system for monitoring the advanced process controller.

22. A control system as in claim 17, further comprising:
an advanced regulatory controller for regulating at least one of the plurality of field elements in an air separation unit.

23. A control system as in claim 22, wherein the advanced regulatory controller is a model-based adaptive controller.

24. A control system as in claim 22, wherein the advanced regulatory controller is a model free adaptive controller.

25. A control system as in claim 22, further comprising:
a regulatory controller for controlling a field element,
wherein said regulatory controller is a proportional plus integral plus derivative controller, a gap controller, a deadband controller, or a hand indicating controller.

26. A network of air separation units, comprising:
at least two air separation units, each air separation unit including a plurality of field elements and having at least one production level and an energy usage level corresponding to the production level;
a pipeline in fluid communication with the at least two air separation units;
a control system for automatically setting the target production level for the at least two air separation units, the control system in control communication with the at least two air separation units and including
a receiver for receiving inputs from the at least two air separation units, and
a supervisory controller for generating data representative of a network production target level and a network energy usage level for the at least two air separation units.

27. A network as in Claim 26, further comprising:
an Operational Control Center for generating a network production level target, and wherein data includes a production target level for at least one of the air separation units.
